# EUROPEAN PATENT SPECIFICATION

(11) **EP 4 534 730 B1**
(45) Date of publication and mention of the grant of the patent: **24.06.2026**
(21) Application number: 24191394.6
(22) Date of filing: 29.07.2024
(51) Int. Cl.: C25B 1/04, H01M 4/86, H01M 4/88, H01M 8/1004, C25B 9/60, C25B 9/75, C25B 9/77, H01M 8/0245

(54) **ELECTRODE STRUCTURE**
ELEKTRODENSTRUKTUR
STRUCTURE D'ÉLECTRODE

(30) Priority: 21.09.2023 JP 2023155640
(43) Date of publication of application: 09.04.2025
(73) Proprietor: SCREEN Holdings Co., Ltd., Kyoto-shi, Kyoto 602-8585 (JP)
(72) Inventor: Kawakawi, Takuto, Kyoto-shi, Kyoto, 602-8585 (JP)
(74) Representative: Goddar, Heinz J.

(56) References cited:
- JP-A- 2016 012 483
- JP-A- 2019 160 665
- JP-A- 2019 212 579
- JP-A- 2022 023 996
- US-A1- 2014 017 590

## Description

The present invention relates to an electrode structure.

### Description of the Background Art

In a solid polymer water electrolyzer conventionally known, hydrogen (H₂) is produced by electrolysis of water (H₂O). The solid polymer water electrolyzer has a cell stack with cells and separators stacked alternately. Each of the cells includes an electrolyte membrane, and a catalyst layer formed on each of both sides of the electrolyte membrane.

During use of the solid polymer water electrolyzer, a voltage is applied between an anode-side catalyst layer and a cathode-side catalyst layer and water is supplied to the anode-side catalyst layer. This causes electrochemical reactions as follows in the anode-side catalyst layer and the cathode-side catalyst layer. As a result, hydrogen is output from the cathode-side catalyst layer.

| | |
|---|---|
| (anode side) | 2H₂O → 4H⁺ + O₂ + 4e⁻ |
| (cathode side) | 2H⁺ + 2e⁻ → H₂ |

The conventional solid polymer water electrolyzer is described in Japanese Patent Application Laid-Open No. 2022-023996, describing the preamble of claim 1.

In the conventional solid polymer water electrolyzer, the catalyst layer is entirely used as an electrode. However, if a formation range of the catalyst layer relative to the electrolyte membrane is determined with low accuracy, using the catalyst layer entirely as an electrode causes fluctuation of an effective region to practically function as an electrode.

### SUMMARY OF THE INVENTION

The present invention is intended to provide a technique that achieves reduction in fluctuation of an effective region to function as an electrode even if a formation range of a catalyst layer is determined with low accuracy.

The present invention defined in a first aspect an electrode structure according to claim 1, inter alia comprising: an electrolyte membrane; a first catalyst layer formed on one of surfaces of the electrolyte membrane; a first gas diffusion layer stacked on a surface of the first catalyst layer; a second catalyst layer formed on the other surface of the electrolyte membrane; and a porous transport layer stacked on a surface of the second catalyst layer. An outer edge of the porous transport layer is arranged at a more inward position than an outer edge of the first gas diffusion layer, an outer edge of the first catalyst layer, and an outer edge of the second catalyst layer.

According to the present invention, an effective region of the first catalyst layer and the second catalyst layer is defined using the porous transport layer. By doing so, even if formation ranges of the first catalyst layer and the second catalyst layer are determined with low accuracy, it still becomes possible to reduce fluctuation of the effective region to function as an electrode.

In a state viewed in a stacking direction, the first catalyst layer and the second catalyst layer may have an overlapping region where the first catalyst layer and the second catalyst layer overlap each other and the outer edge of the first catalyst layer and the outer edge of the second catalyst layer may be at positions differing from each other, and the outer edge of the porous transport layer may be arranged at a more inward position than an outer edge of the overlapping region.

By ding so, irrespective of a difference between the positions of the first catalyst layer and the second catalyst layer, it becomes possible to define the effective region of the first catalyst layer and the second catalyst layer using the porous transport layer.

In a state viewed in a stacking direction, the porous transport layer may have a rectangular shape and all the four sides of the porous transport layer may be arranged at more inward positions than the outer edge of the first gas diffusion layer, the outer edge of the first catalyst layer, and the outer edge of the second catalyst layer.

By doing so, it becomes possible to define the rectangular effective region of the first catalyst layer and the second catalyst layer with high accuracy using the porous transport layer.

The first catalyst layer and the second catalyst layer may be coating films.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view of a water electrolyzer;
Fig. 2 is a schematic view showing one cell and separators in a pair arranged on both sides of the cell;
Fig. 3 shows an electrode structure viewed in a stacking direction from an anode side; and
Fig. 4 is a sectional view of the electrode structure.

### DESCRIPTION OF THE PREFERRED EMBODIMENTS

A preferred embodiment of the present invention will be described below by referring to the drawings.

### <1. Outline of Water Electrolyzer>

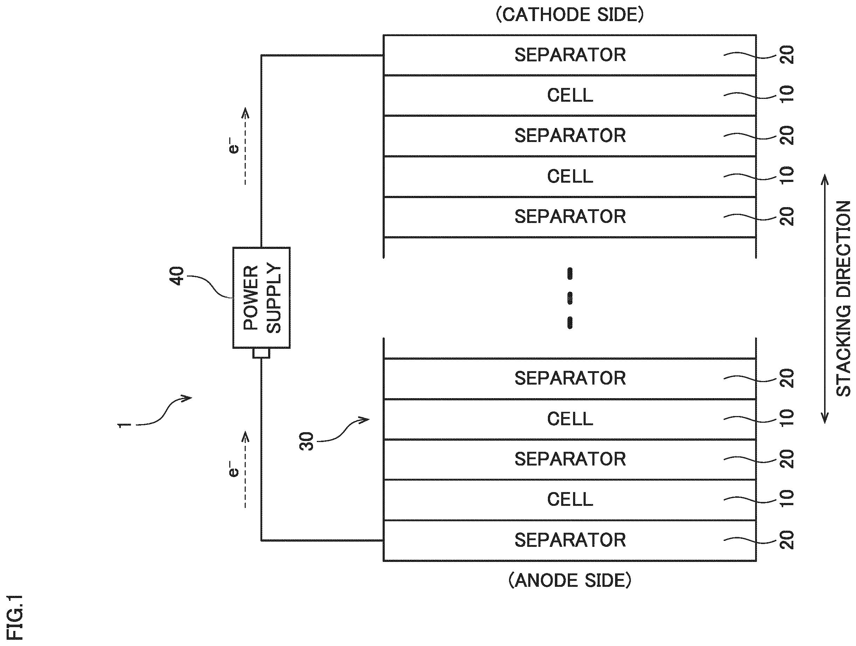

Fig. 1 is a schematic view of a water electrolyzer 1. The water electrolyzer 1 is to produce hydrogen by solid polymer water electrolysis. As shown in Fig. 1, the water electrolyzer 1 includes a cell stack 30 with a plurality of cells 10 and a plurality of separators 20, and a power supply 40. The cells 10 and the separators 20 are stacked alternately to form the cell stack 30. In the following, a direction in which the cells 10 and the separators 20 are stacked will be called a "stacking direction."

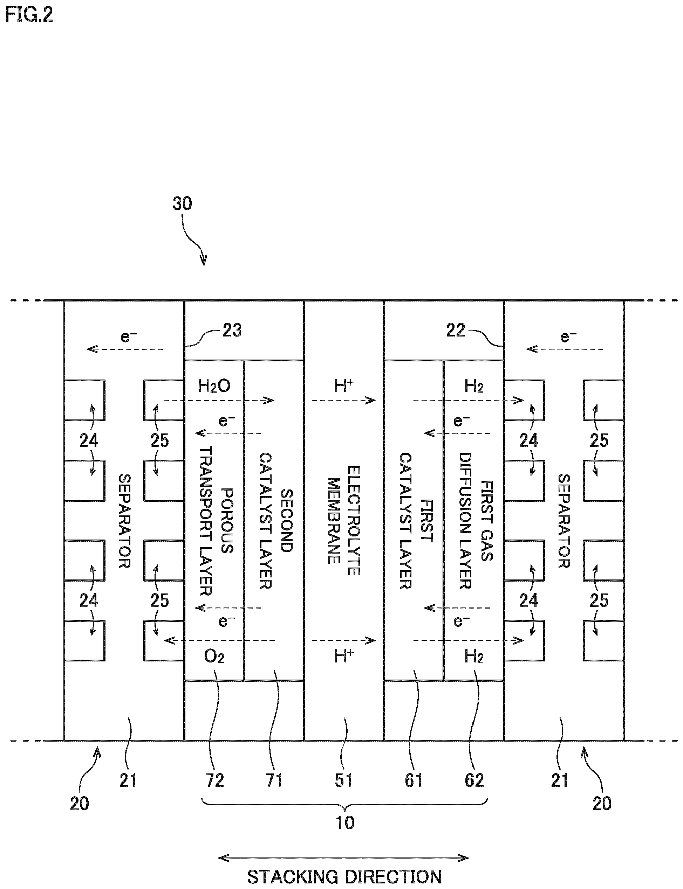

Fig. 2 schematically shows only one cell 10 and separators 20 in a pair arranged on both sides of this cell 10 that form the cell stack 30 of the water electrolyzer 1. As shown in Fig. 2, one cell 10 includes an electrolyte membrane 51, a first catalyst layer 61, a first gas diffusion layer 62, a second catalyst layer 71, and a porous transport layer 72.

A stacked body composed of the electrolyte membrane 51, the first catalyst layer 61, the first gas diffusion layer 62, the second catalyst layer 71, and the porous transport layer 72 is called a membrane-electrode-assembly (EMA). A stacked body composed of the electrolyte membrane 51, the first catalyst layer 61, and the second catalyst layer 71 is called a catalyst-coated membrane (CCM).

The electrolyte membrane 51 is a membrane having ion conductivity (ionexchange membrane). The electrolyte membrane 51 of the present preferred embodiment is a proton-exchange membrane that conducts hydrogen ions (H⁺). A fluorine-based or hydrocarbon-based polymer electrolyte membrane is used as the electrolyte membrane 51. More specifically, a polymer electrolyte membrane containing perfluorocarbon sulfonic acid is used as the electrolyte membrane 51, for example. The electrolyte membrane 51 has a thickness from 5 to 200 µm, for example.

The first catalyst layer 61 is a catalyst layer that causes electrochemical reaction on a cathode side. The first catalyst layer 61 is formed on a cathode-side surface of the electrolyte membrane 51. The first catalyst layer 61 contains a large number of carbon particles on which catalyst particles are supported. The catalyst particles are particles of platinum, for example. Alternatively, the catalyst particles may be prepared by mixing particles of a tiny amount of ruthenium or cobalt into particles of platinum. During use of the water electrolyzer 1, hydrogen ions (H⁺) and electrons (e⁻) are supplied to the first catalyst layer 61. Then, the power supply 40 applies a voltage between the first catalyst layer 61 and the second catalyst layer 71. By doing so, by the actions of the applied voltage and the catalyst particles, a reduction reaction is caused in the first catalyst layer 61 to generate hydrogen gas (H₂) from the hydrogen ions and the electrons.

The first gas diffusion layer 62 is a layer for transporting electrons from the separator 20 to the first catalyst layer 61 and for transporting hydrogen generated in the first catalyst layer 61 to the separator 20. The first gas diffusion layer 62 is stacked on an external surface of the first catalyst layer 61 (a surface on the opposite side to the electrolyte membrane 51). The first catalyst layer 61 is interposed between the electrolyte membrane 51 and the first gas diffusion layer 62. The first gas diffusion layer 62 is made of a material having electrical conductivity and porosity. According to the present invention, the first gas diffusion layer 62 is formed using a porous base material (carbon paper) made of carbon.

The second catalyst layer 71 is a catalyst layer that causes electrochemical reaction on an anode side. The second catalyst layer 71 is formed on an anode-side surface of the electrolyte membrane 51 (a surface on the opposite side to the first catalyst layer 61). The second catalyst layer 71 contains a large number of catalyst particles. The catalyst particles are particles of iridium oxide (IrOx), platinum (Pt), an alloy of iridium (Ir) and ruthenium (Ru), or an alloy of iridium (Ir) and titanium dioxide (TiO₂), for example. During use of the water electrolyzer 1, water (H₂O) is supplied to the second catalyst layer 71. Then, the power supply 40 applies a voltage between the first catalyst layer 61 and the second catalyst layer 71. By doing so, by the actions of the applied voltage and the catalyst particles, the water is electrolyzed into hydrogen ions (H⁺), oxygen (O₂), and electrons (e⁻) in the second catalyst layer 71.

The porous transport layer 72 is a layer for supplying water uniformly to the second catalyst layer 71 and for transporting oxygen and electrons generated in the second catalyst layer 71 to the separator 20. The porous transport layer 72 is stacked on an external surface of the second catalyst layer 71 (a surface on the opposite side to the electrolyte membrane 51). The second catalyst layer 71 is interposed between the electrolyte membrane 51 and the porous transport layer 72. The porous transport layer 72 is made of a material having electrical conductivity and porosity. According to the present invention, the porous transport layer 72 is formed using a porous base material made of metal such as titanium or stainless steel.

The separator 20 is a layer for moving electrons between the cells 10 next to each other and for forming a passage for water, oxygen, and hydrogen. The separator 20 is interposed between the first gas diffusion layer 62 of one cell 10 and the porous transport layer 72 of the cell 10 next to the one cell 10. The separator 20 is composed of a metal plate 21 having electrical conductivity and impermeable to gas and liquid. The metal plate 21 has a cathode surface 22 contacting the first gas diffusion layer 62, and an anode surface 23 contacting the porous transport layer 72.

The metal plate 21 has a plurality of cathode grooves 24 formed at the cathode surface 22. Hydrogen generated in the first catalyst layer 61 passes through the first gas diffusion layer 62 and is then output to the outside through the cathode grooves 24 of the separator 20.

The metal plate 21 has a plurality of anode grooves 25 formed at the anode surface 23. Water is supplied to the porous transport layer 72 through the anode grooves 25 of the separator 20. Oxygen generated in the second catalyst layer 71 passes through the porous transport layer 72 and is then output to the outside through the anode grooves 25 of the separator 20.

The power supply 40 is a device that applies a voltage to the cell stack 30. As shown in Fig. 1, the power supply 40 has a positive terminal electrically connected to the separator 20 at an end portion of the cell stack 30 farthest on the anode side. The power supply 40 has a negative terminal electrically connected to the separator 20 at an end portion of the cell stack 30 farthest on the cathode side. The power supply 40 applies a voltage to the cell stack 30 necessary for electrolysis of water.

During use of the water electrolyzer 1, water is supplied from the anode grooves 25 of the separator 20 to the second catalyst layer 71 through the porous transport layer 72. Then, by the actions of a voltage applied from the power supply 40 and the catalyst particles in the second catalyst layer 71, the water is decomposed into hydrogen ions, oxygen, and electrons. The hydrogen ions propagate through the electrolyte membrane 51 into the first catalyst layer 61. The oxygen passes through the porous transport layer 72 and the anode grooves 25 of the separator 20 and is then output to the outside. The electrons pass through the porous transport layer 72 and the separator 20 and then flow into the adjoining cell 10. In the adjoining cell 10, these electrons pass through the first gas diffusion layer 62 to reach the first catalyst layer 61. Then, the hydrogen ions and the electrons are combined with each other to generate hydrogen in the first catalyst layer 61. The generated hydrogen passes through the first gas diffusion layer 62 and the cathode grooves 24 of the separator 20 and is then output to the outside. In this way, hydrogen is produced.

### <2. Electrode Structure>

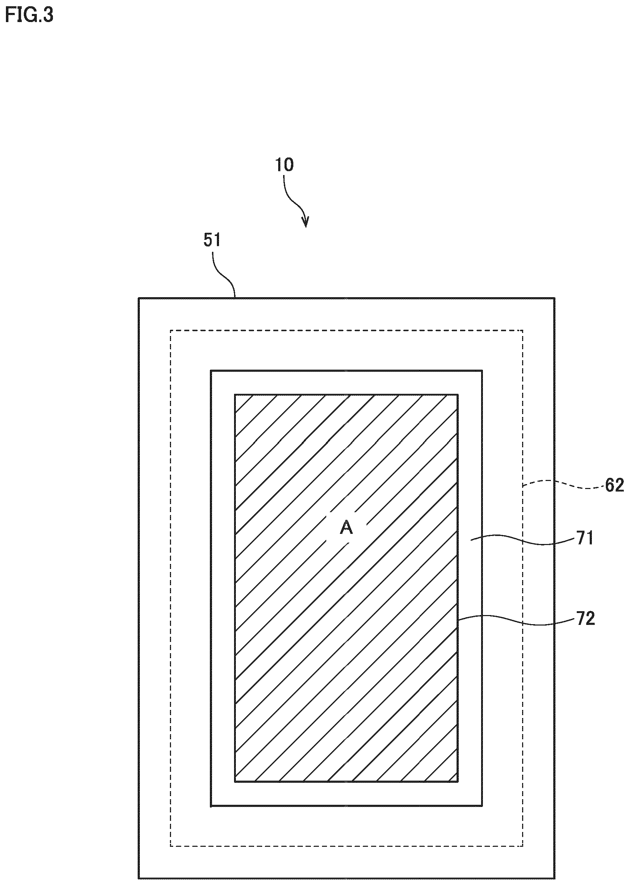

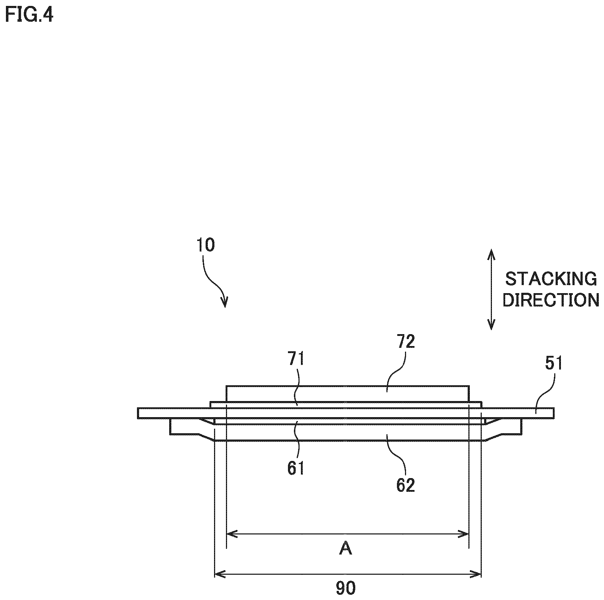

As described above, the cell 10 is an "electrode structure" having a function as an electrode. The configuration of the cell 10 will be described below in more detail. Fig. 3 shows one cell 10 viewed in the stacking direction from the anode side. Fig. 4 is a sectional view of the cell 10.

Each of the electrolyte membrane 51, the first catalyst layer 61, the first gas diffusion layer 62, the second catalyst layer 71, and the porous transport layer 72 has a rectangular shape in a state viewed in the stacking direction. As shown in Fig. 4, an outer edge of the first catalyst layer 61 is arranged at a more inward position than an outer edge of the electrolyte membrane 51. Thus, in a state viewed in the stacking direction, the area of the first catalyst layer 61 is smaller than that of the electrolyte membrane 51. As shown in Fig. 4, an outer edge of the second catalyst layer 71 is arranged at a more inward position than the outer edge of the electrolyte membrane 51. Thus, in a state viewed in the stacking direction, the area of the second catalyst layer 71 is smaller than that of the electrolyte membrane 51.

The first catalyst layer 61 is a coating film formed by coating one of surfaces of the electrolyte membrane 51 with catalyst ink. The second catalyst layer 71 is a coating film formed by coating the other surface of the electrolyte membrane 51 with catalyst ink. During coating with the catalyst ink, a coating range is controlled in such a manner that the first catalyst layer 61 and the second catalyst layer 71 are formed at the substantially same position when viewed in the stacking direction. Thus, the first catalyst layer 61 and the second catalyst layer 71 have an overlapping region 90 where the first catalyst layer 61 and the second catalyst layer 71 overlap each other in a state viewed in the stacking direction. Meanwhile, it is extremely difficult to make an exact match between ranges of coating of the both surfaces of the electrolyte membrane 51 with the catalyst ink. This causes a slight difference between the position of the outer edge of the first catalyst layer 61 and the position of the outer edge of the second catalyst layer 71, as shown in Fig. 4. In some cases, in a state viewed in the stacking direction, the area of the first catalyst layer 61 and that of the second catalyst layer 71 are not exactly the same.

The first gas diffusion layer 62 is bonded to the surface of the first catalyst layer 61 on the opposite side to the electrolyte membrane 51. The first gas diffusion layer 62 covers the first catalyst layer 61. An outer edge of the first gas diffusion layer 62 is arranged at a more outward position than the outer edge of the first catalyst layer 61. The porous transport layer 72 is bonded to the surface of the second catalyst layer 71 on the opposite side to the electrolyte membrane 51. The porous transport layer 72 covers the second catalyst layer 71 partially. An outer edge of the porous transport layer 72 is arranged at a more inward position than the outer edge of the second catalyst layer 71.

The above-described cell 10 has a region where the first catalyst layer 61, the first gas diffusion layer 62, the second catalyst layer 71, and the porous transport layer 72 overlap each other in the stacking direction, and this region is an effective region A to practically function as an electrode.

In the cell 10 of the present preferred embodiment, the outer edge of the porous transport layer 72 is arranged at a more inward position than the outer edge of the first gas diffusion layer 62, the outer edge of the first catalyst layer 61, and the outer edge of the second catalyst layer 71. Thus, in the present preferred embodiment, a region corresponding to the porous transport layer 72 is the effective region A to practically function as an electrode. Specifically, it is possible to define the effective region A of the first catalyst layer 61 and the second catalyst layer 71 using the porous transport layer 72. By doing so, even if formation ranges of the first catalyst layer 61 and the second catalyst layer 71 are determined with low accuracy, it still becomes possible to reduce fluctuation of the effective region A to function as an electrode.

In particular, if the first catalyst layer 61 and the second catalyst layer 71 are coating films, a slight difference is caused between the position of the outer edge of the first catalyst layer 61 and the position of the outer edge of the second catalyst layer 71, as described above. In this regard, in the present preferred embodiment, the outer edge of the porous transport layer 72 is arranged at a more inward position than an outer edge of the overlapping region 90 where the first catalyst layer 61 and the second catalyst layer 71 overlap each other. Thus, irrespective of a difference between the positions of the first catalyst layer 61 and the second catalyst layer 71, it is possible to define the effective region A of the first catalyst layer 61 and the second catalyst layer 71 using the porous transport layer 72.

In the present preferred embodiment, the porous transport layer 72 has a rectangular shape in a state viewed in the stacking direction. Furthermore, all the four sides of the outer edge of the porous transport layer 72 are arranged at more inward positions than the outer edge of the first gas diffusion layer 62, the outer edge of the first catalyst layer 61, and the outer edge of the second catalyst layer 71. Thus, it is possible to define the rectangular effective region A of the first catalyst layer 61 and the second catalyst layer 71 with high accuracy using the porous transport layer 72.

### <3. Modifications>

While one preferred embodiment of the present invention has been described above, the present invention is not limited to the above-described preferred embodiment. The following describes various modifications by mainly showing differences from the above-described preferred embodiment.

In the above-described preferred embodiment, all the four sides of the rectangular porous transport layer 72 are arranged at more inward positions than the outer edge of the first gas diffusion layer 62, the outer edge of the first catalyst layer 61, and the outer edge of the second catalyst layer 71. In another case, only some of the four sides of the porous transport layer 72 may be arranged at more inward positions than the outer edge of the first gas diffusion layer 62, the outer edge of the first catalyst layer 61, and the outer edge of the second catalyst layer 71. For example, of the two long sides and the two short sides of the porous transport layer 72 shown in Fig. 3, only the two long sides or only the two short sides may be arranged at more inward positions than the outer edge of the first gas diffusion layer 62, the outer edge of the first catalyst layer 61, and the outer edge of the second catalyst layer 71.

The cell 10 discussed in the above-described preferred embodiment uses a proton-exchange membrane as the electrolyte membrane 51. However, the electrode structure of the present invention may use an anion-exchange membrane as an electrolyte membrane.

A structure comparable to that of the above-described preferred embodiment may be applied to an electrode structure used in a liquid organic hydrogen carrier (LOHC) process by which an aromatic compound such as toluene is hydrogenated to produce an organic hydride (toluene-methylcyclohexane, for example).

Some of the structures shown in the above-described preferred embodiment or modifications may be deleted or other structures may be added within a scope not deviating from the scope of the present invention as defined in the appended claims.

While the invention has been shown and described in detail, the foregoing description is in all aspects illustrative and not restrictive. It is therefore understood that numerous modifications and variations can be devised without departing from the scope of the present invention as defined in the appended claims.

## Claims

1. An electrode structure comprising:
an electrolyte membrane (51);
a first catalyst layer (61) formed on one of surfaces of said electrolyte membrane (51);
a first gas diffusion layer (62) stacked on a surface of said first catalyst layer (61);
a second catalyst layer (71) formed on the other surface of said electrolyte membrane (51); and
a porous transport layer (72) stacked on a surface of said second catalyst layer (71),
and being **characterised in that**:
said first gas diffusion layer (62) is a porous base material made of carbon,
said porous transport layer (72) is a porous base material made of titanium or stainless steel,
an outer edge of said porous transport layer (72) is arranged at a more inward position than an outer edge of said first gas diffusion layer (62), an outer edge of said first catalyst layer (61), and an outer edge of said second catalyst layer (71).

2. The electrode structure according to claim 1, wherein
in a state viewed in a stacking direction, said first catalyst layer (61) and said second catalyst layer (71) have an overlapping region (90) where said first catalyst layer (61) and said second catalyst layer (71) overlap each other and the outer edge of said first catalyst layer (61) and the outer edge of said second catalyst layer (71) are at positions differing from each other, and
the outer edge of said porous transport layer (72) is arranged at a more inward position than an outer edge of said overlapping region (90).

3. The electrode structure according to claim 1 or 2, wherein
in a state viewed in a stacking direction, said porous transport layer (72) has a rectangular shape and all the four sides of said porous transport layer (72) are arranged at more inward positions than the outer edge of said first gas diffusion layer (62), the outer edge of said first catalyst layer (61), and the outer edge of said second catalyst layer (71).

4. The electrode structure according to any one of claims 1 to 3, wherein
said first catalyst layer (61) and said second catalyst layer (71) are coating films.

## Patentansprüche

1. Elektrodenstruktur, umfassend:
eine Elektrolytmembran (51);
eine erste Katalysatorschicht (61), die auf einer der Oberflächen besagter Elektrolytmembran (51) ausgebildet ist;
eine erste Gasdiffusionsschicht (62), die auf einer Oberfläche besagter ersten Katalysatorschicht (61) gestapelt ist;
eine zweite Katalysatorschicht (71), die auf der anderen Oberfläche besagter Elektrolytmembran (51) ausgebildet ist; und
eine poröse Transportschicht (72), die auf einer Oberfläche besagter zweiten Katalysatorschicht (71) gestapelt ist,
und **dadurch gekennzeichnet, dass**
besagte erste Gasdiffusionsschicht (62) ein poröses Basismaterial aus Kohlenstoff ist,
besagte poröse Transportschicht (72) ein poröses Basismaterial aus Titan oder Edelstahl ist, eine Außenkante besagter porösen Transportschicht (72) an einer weiter innen liegenden Position angeordnet ist als eine Außenkante besagter ersten Gasdiffusionsschicht (62), eine Außenkante besagter ersten Katalysatorschicht (61) und eine Außenkante besagter zweiten Katalysatorschicht (71).

2. Elektrodenstruktur nach Anspruch 1, wobei in einem in einer Stapelrichtung betrachteten Zustand besagte erste Katalysatorschicht (61) und besagte zweite Katalysatorschicht (71) einen Überlappungsbereich (90) aufweisen, wo besagte erste Katalysatorschicht (61) und besagte zweite Katalysatorschicht (71) einander überlappen und sich die Außenkante besagter ersten Katalysatorschicht (61) und die Außenkante besagter zweiten Katalysatorschicht (71) an voneinander verschiedenen Positionen befinden, und
die Außenkante besagter porösen Transportschicht (72) an einer weiter innen liegenden Position angeordnet ist als eine Außenkante besagten Überlappungsbereichs (90).

3. Elektrodenstruktur nach Anspruch 1 oder 2, wobei in einem in einer Stapelrichtung betrachteten Zustand besagte poröse Transportschicht (72) eine rechteckige Gestalt aufweist und alle vier Seiten besagter porösen Transportschicht (72) an weiter innen liegenden Positionen angeordnet sind als die Außenkante besagter ersten Gasdiffusionsschicht (62), die Außenkante besagter ersten Katalysatorschicht (61) und die Außenkante besagter zweiten Katalysatorschicht (71).

4. Elektrodenstruktur nach einem der Ansprüche 1 bis 3, wobei besagte erste Katalysatorschicht (61) und besagte zweite Katalysatorschicht (71) Beschichtungsfilme sind.

## Revendications

1. Structure d'électrode comprenant :
une membrane d'électrolyte (51) ;
une première couche de catalyseur (61) formée sur l'une des surfaces de ladite membrane d'électrolyte (51) ;
une première couche de diffusion de gaz (62) empilée sur une surface de ladite première couche de catalyseur (61) ;
une deuxième couche de catalyseur (71) formée sur l'autre surface de ladite membrane d'électrolyte (51) ; et
une couche de transport poreuse (72) empilée sur une surface de ladite deuxième couche de catalyseur (71),
et étant **caractérisé en ce que** :
ladite première couche de diffusion de gaz (62) est un matériau de base poreux constitué de carbone,
ladite couche de transport poreuse (72) est un matériau de base poreux constitué de titane ou d'acier inoxydable,
un bord extérieur de ladite couche de transport poreuse (72) est agencée à une position située plus à l'intérieur qu'un bord extérieur de ladite première couche de diffusion de gaz (62), un bord extérieur de ladite première couche de catalyseur (61) et un bord extérieur de ladite deuxième couche de catalyseur (71).

2. Structure d'électrode selon la revendication 1, dans laquelle
dans un état vu dans une direction d'empilement, ladite première couche de catalyseur (61) et ladite deuxième couche de catalyseur (71) ont une région de chevauchement (90) où ladite première couche de catalyseur (61) et ladite deuxième couche de catalyseur (71) se chevauchent et le bord extérieur de ladite première couche de catalyseur (61) et le bord extérieur de ladite deuxième couche de catalyseur (71) sont à des positions différentes l'une de l'autre, et
le bord extérieur de ladite couche de transport poreuse (72 est agencé à une position située plus à l'intérieur qu'un bord extérieur de ladite région de chevauchement (90).

3. Structure d'électrode selon la revendication 1 ou 2, dans laquelle
dans un état vu dans une direction d'empilement, ladite couche de transport poreuse (72) a une forme rectangulaire et les quatre côtés de ladite couche de transport poreuse (72) sont tous agencés à des positions situées plus à l'intérieur que le bord extérieur de ladite première couche de diffusion de gaz (62), le bord extérieur de ladite première couche de catalyseur (61) et le bord extérieur de ladite deuxième couche de catalyseur (71).

4. Structure d'électrode selon l'une quelconque des revendications 1 à 3,
dans laquelle ladite première couche de catalyseur (61) et ladite deuxième couche de catalyseur (71) sont des films de revêtement.
